# EUROPÄISCHE PATENTSCHRIFT

(11) **EP 3 608 557 B1**
(45) Veröffentlichungstag und Bekanntmachung des Hinweises auf die Patenterteilung: **02.08.2023**
(21) Anmeldenummer: 18188140.0
(22) Anmeldetag: 09.08.2018
(51) Int. Cl.: F16H 25/22, F16H 25/20

(54) **KUGELGEWINDETRIEB**
BALL SCREW
VIS D'ENTRAÎNEMENT À BILLE

(43) Veröffentlichungstag der Anmeldung: 12.02.2020
(73) Patentinhaber: SFS Group International AG, 9435 Heerbrugg (CH)
(72) Erfinder: PERIC, Edi, 9410 Heiden (CH); SCHÄDLICH, André, 9469 Haag (CH); FREI, Stefan, 9443 Widnau (CH); ZACH, Marijo, 9443 Widnau (CH)

(56) Entgegenhaltungen:
- DE-A1- 10 219 840
- DE-A1-102008 062 180
- DE-A1-102009 036 824
- US-A- 2 446 393
- US-A- 2 590 251

## Beschreibung

Die vorliegende Erfindung befasst sich mit einem Kugelgewindetrieb, insbesondere einem vereinfachten Aufbau des Verklemmschutzes beim Endanschlag eines Kugelgewindetriebes.

### TECHNISCHER HINTERGRUND

Als Kugelumlaufspindel oder auch Kugelgewindetrieb (KGT) wird üblicherweise ein Wälzschraubtrieb bezeichnet mit Kugeln als Wälzkörper. Zu den Hauptbestandteilen eines KGT zählen eine Gewindespindel und eine diese Spindel umgreifende Spindelmutter. Zwischen diesen beiden Bauteilen laufen im Betrieb Kugeln um, wobei die Gewindezüge der Gewindespindel wie auch der Spindelmutter komplementär ausgebildet und so aufeinander abgestimmt sind, dass sie als Kugelführungen wirken. Anders als bei einer Schraube-Mutter-Verbindung, bei der die Gewindeflanken flächig aufeinander gleiten, übernehmen beim KGT die umlaufenden Kugeln im als Kugelkanal ausgelegten Gewinde die Lastübertragung zwischen Mutter und Spindel. Die flächige Gleitbewegung wird also durch eine (Ab-) Rollbewegung ersetzt, was mit verringerter Reibung einhergeht.

Um einen geschlossenen Umlaufpfad für die Kugeln zu erhalten, werden in einer Spindelmutter eine oder mehrere Kugelumlenkungen eingesetzt. Diese hat die Aufgabe, die Kugeln an einer ersten Stelle aus der Kugelführung zwischen Spindelmutter und Gewindespindel herauszuheben und an einer zweiten Stelle zurückzuführen. Die Kugelrückführung stellt also einen Bypass dar, der eine oder mehrere Gewindezüge des Mutter-Spindelsystems überbrückt.

Technisch gesehen funktioniert ein KGT als Schraubgetriebe, das eine Drehbewegung in eine Längsbewegung umsetzen kann, wobei die Unter- bzw. Übersetzung durch die Dimensionierung der Gewindespindel, genauer durch die Steigung des Gewindes bestimmt wird.

Kugelgewindetriebe werden in vielen technischen Anwendungen eingesetzt, vor allem im Maschinenbau und dort bevorzugt in Werkzeugmaschinen. Zunehmend kommen KGT aber auch als Längsantriebe in Bereichen zum Einsatz, wo bisher Hydraulik- oder Pneumatiksysteme Verwendung fanden, z.B. in Pressen, Spritzgiessmaschinen und Servolenkungen. Zudem spielen KGT auch eine zunehmende Rolle in elektromechanischen und elektro-hydraulischen Bremssystemen, wo KGT als Ersatz für hydraulische Bremszylinder oder parallel zu bekannten Bremssystemen bei Bremsassistenzsystemen eingesetzt werden.

Es ist einleuchtend, dass im Betrieb der Verfahrweg der Spindelmutter auf die Länge der Spindelmutter begrenzt ist, weil bei einer Trennung von Spindel und Mutter die Kugeln ihre Führung verlieren. Die einfachste Lösung für dieses Problem besteht darin, am Längsende der Spindel einen Flansch vorzusehen, der für die Spindelmutter als Begrenzungsanschlag wirkt.

### STAND DER TECHNIK

Ein Flansch als an der Spindel angebrachter axialer Endanschlag wirkt zwar als stirnflächige Begrenzung für den Verfahrweg der Spindelmutter. Die Auslegung hat aber einen entscheidenden Nachteil, weil in einer Mutter-Spindel-Anordnung wegen der relativen Drehbewegung von Spindel und Mutter zusätzlich zum Impuls in Richtung der Spindellängsachse ein Drehimpuls aufgenommen werden muss. Der bekannte und bei einer Schraube-Mutter Kombination gewünschte, selbstsichernde Effekt kann beim KGT dazu führen, dass Spindelmutter und Gewindespindel verklemmen, was dann ein sehr hohes Lösemoment erfordert.

Daher schlägt die DE 10 2016 113 395 vor, eine Radialanschlagscheibe drehfest mit der Spindel zu verbinden sowie an der Spindelmutter am Aussenumfang der Stirnseite in Axialrichtung einen Vorsprung vorzusehen. Nähert sich die Mutter dem Spindelende, so schlägt der Vorsprung der Mutter in der Endlage an der Radialanschlagscheibe an und stoppt die Drehbewegung.

Das Dokument DE 102 19 840 A1 zeigt in Figur 2 einen Kugelgewindetrieb mit Gewindespindel und einer Spindelmutter. Die Spindelmutter ist mit einer motorisch angetriebenen Hohlwelle drehfest verbunden. Motor und Hohlwelle sind ortsfest im Gehäuse gelagert; die Drehbewegung der Hohlwelle / Mutter wird daher in eine Translationsbewegung der Gewindespindel übersetzt. Die Gewindespindel überträgt diese Linearbewegung auf einen Zylinder. Dieser Zylinder ist in einer Linearführung gehalten und weist ein Rastelement auf, das als Radialanschlagelement wirkt.

Die Schrift US 2,590,251 beschreibt ein mechanisches Betätigungselement, genauer einen elektrisch angetriebenen Spindelantrieb. Auch hier wurde erkannt, dass übliche (axiale) Endanschläge bei einem solchen Mutter-Spindelantrieb ein Problem darstellen, weil sie den Antrieb blockieren können. Das US-Patent schlägt ein Radialanschlagselement vor, das auf eine Keilverzahnung im Endabschnitt einer Gewindemutter formschlüssig aufgeschoben wird. Die Keilverzahnung erlaubt zudem eine Einstellung des Winkels der radialen Anschlagflächen des Radialanschlagelements.

Aufgabe der vorliegenden Erfindung ist es, dieses Prinzip weiterzuentwickeln, insbesondere den Montageaufwand des Radialanschlags zu vereinfachen und gleichzeitig eine gute Impulsableitung zu gewährleisten.

### BESCHREIBUNG DER ERFINDUNG

Die vorliegende Erfindung löst diese Aufgabe durch eine spezielle Auslegung der zwei Verdrehsicherungen eines einstückigen Lager-/Anschlagelements.

Ein Kugelgewindetrieb 10 umfasst, wie im Stand der Technik bekannt, eine Gewindespindel 12 und eine Spindelmutter 14. Die Gewindespindel 12 wird von der Spindelmutter 14 koaxial zumindest teilweise umschlossen. Beide bilden zwischen sich einen Zwischenraum 16 aus komplementär sich gegenüber stehenden Gewindezügen, in dem eine Vielzahl von Kugeln umlaufen. Die Spindelmutter weist (mindestens) einen Anschlag an einer axialen Stirnseite 18 auf. Weiters umfasst der Kugelgewindetrieb ein Radialanschlagselement 22. Dieses ist kraftschlüssig mit der Gewindespindel 12 verbunden und darauf ausgelegt mit der komplementär ausgestalteten axialen Stirnseite 18 der Spindelmutter 14 zusammenzuwirken. Mit dem Radialanschlagselement wird gewährleistet, dass die Wegbegrenzung des Gewindespindel-Spindelmutter-Systems nicht an der axial ausgerichteten Stirnfläche erfolgt, sondern durch eine am Umfang der Spindelmutter angeordnete Anschlagsfläche, die mit einer entsprechenden Gegen-Anschlagsfläche des Radialanschlagselementes zusammenwirkt. Ferner ist ein Lagerelement vorgesehen zur Aufnahme eines Längsendes der Gewindespindel 12. Das Radialanschlagelement 22 und das Lagerelement wird kombiniert als einstückiges Lager/Anschlagelement 24 ausgeführt und weist zwei Verdrehsicherungen 26, 28 auf. Dadurch wird die Systemkomplexität wie auch der Montageaufwand verringert.

Dabei ist die erste Verdrehsicherung 26 so gestaltet, dass eine Winkelbeziehung zwischen der Gewindespindel 12 und dem Lager/Anschlagelement 24 einstellbar und anschliessend kraftschlüssig fixierbar ist. Mit anderen Worten, während der Montage kann die relative Lage des Gewindeendes der Spindel zum Anschlag eingestellt und anschliessend dauerhaft fixiert werden.

Die zweite Verdrehsicherung 28 wiederum ist erfindungsgemäss so ausgelegt, dass das Lager-/ Anschlagelement 24 form- und/oder kraftschlüssig mit einer weiteren Aufnahme verbunden werden kann. Diese weitere Aufnahme kann beispielsweise ein Gehäuse oder Maschinenteil sein, in welches der Kugelgewindetrieb verbaut wird. Am einfachsten wird dies so erfolgen, dass ein Teil des Lager-/ Anschlagelements 24 geometrisch so geformt bzw. technisch so ausgelegt ist, dass es formschlüssig / kraftschlüssig mit der Aufnahme verbaut werden kann. Diese Gestaltung könnte eine Aussenverzahnung sein, Anschlagflächen, Durchgangsbohrungen, Gewinde etc.

Als bevorzugte Realisierungsform kann der Kugelgewindetrieb 10 so ausgeführt werden, dass die erste Verdrehsicherung 26 ein System bzw. eine Kombination ist aus einem an der Gewindespindel 12 angeformten Mehrkant 30 (Drei-, Vier-, ... kant) oder einem an ihr radial aussen angeordneten bzw. angeformten Zahnrad, das mit einer innenverzahnten Öffnung bzw. Bohrung 32 des Lager/ Anschlagelementes 24 zusammenwirkt. Die Verdrehsicherung findet also dadurch statt, dass die relative Lage der Spindel zum Lager/ Anschlagelement durch Zusammenstecken der beiden Bauelemente erfolgt, wobei Mehrkant und Innenverzahnung ineinander greifen und die Verdrehsicherung gewährleisten. Dabei beträgt die Teilung der innenverzahnten Bohrung bevorzugt ein ganzzahlig Vielfaches der Teilung des Mehrkants 30 bzw. des radial aussen angeordneten Zahnrads. Dadurch wird erreicht, dass der Mehrkant 30 in einer Vielzahl von Positionen (Winkelstellungen) kraftschlüssig positioniert werden kann.

Die Ausgestaltung des Anschlags 20 an der axialen Stirnseite 18 der Spindelmutter 14 (als Anschlagfläche zum Gegenstück am Lager/ Anschlagelement 24) wird vorteilhaft als Vorsprung, als Auskragung oder als Freistellung ausgeführt. Entsprechend wird am Lager/Anschlagelement 24 mindestens ein radialer Anschlag 34 vorgesehen und als Vorsprung, Auskragung oder als Freistellung ausgeführt. Dadurch wird die Funktion als Radialanschlagelement wie oben beschrieben im Zusammenwirken mit der entsprechend ausgelegten Spindelmutter erzielt.

### KURZBEZEICHNUNG DER FIGUREN

Figur 1 zeigt schematisch ein KGT mit axialem Anschlag
Figur 2 zeigt ein KGT mit einem erfinderischen Lager-/ Anschlagelements 24 mit zwei Verdrehsicherungen
Figur 3a zeigt ein KGT im montierten Zustand mit einem erfinderischen Lager-/ Anschlagelement 24 im Querschnitt

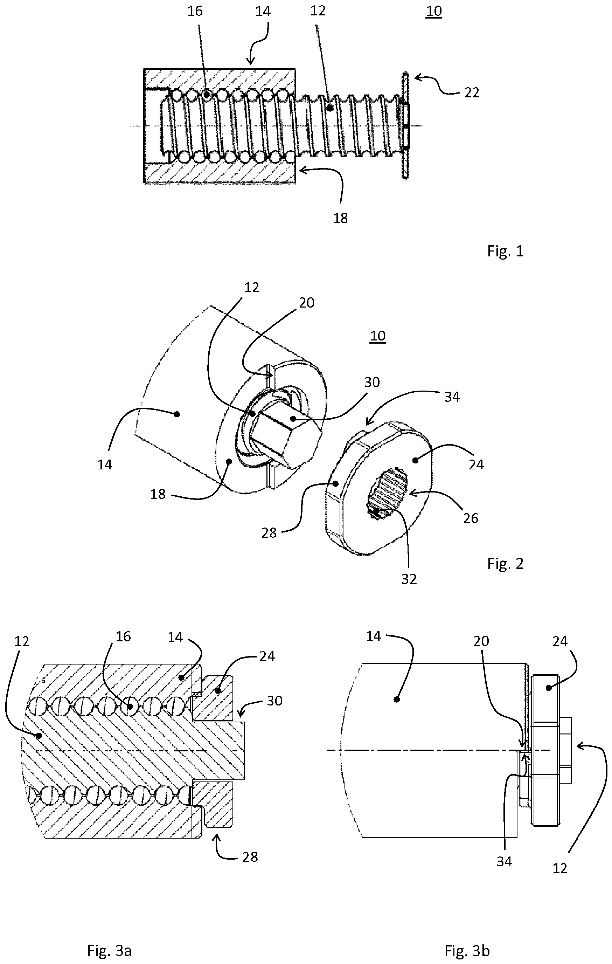

Figur 3a zeigt ein KGT im montierten Zustand mit einem erfinderischen Lager-/ Anschlagelement 24 in Seitenansicht

### BESCHREIBUNG DER FIGUREN

Figur 1 zeigt ein KGT 10 mit den elementarsten Bauteilen Gewindespindel 12 und Spindelmutter 14, die zwischen sich, bedingt durch deren gegenüberstehende Innen- und Aussengewindezüge einen Zwischenraum 16 bilden, der als Kugelführung wirkt. Die üblicherweise vorgesehen Kugelumlenkung, die einen geschlossenen Umlauf der Kugeln erlaubt, ist weggelassen. An einem Ende der Gewindespindel 12 ist eine flächige Anschlagscheibe 22 gezeigt. Diese würde, sobald die Spindelmutter 14 im Bild nach rechts bewegt würde, mit der stirnseitigen Anschlagfläche 18 zusammentreffen. So ein einfacher Flanschanschlag besitzt die oben beschriebenen Nachteile.

Figur 2 zeigt ein KGT 10 mit den bekannten Grundelementen Gewindespindel 12 und Spindelmutter 14 zusammen mit einem erfinderischen Lager-/ Anschlagelement 24 mit zwei Verdrehsicherungen. Die erste Verdrehsicherung 26 ist die Kombination aus dem Mehrkant 30 (als Sechskant gezeigt) und einer innenverzahnten Bohrung 32. Die Zeichnung verdeutlicht, dass diese Innenverzahnung eine höhere Teilung aufweist als der Aussensechskant 30. Dadurch kann beim Zusammenstecken die relative Winkelbeziehung zwischen dem Lageranschlagelement 24 und der Gewindespindel 12 eingestellt werden. Die Fixierung kann danach mittels eines Splints, einem Sprengring, bzw. durch Verstemmen, Vergiessen, Verschweissen, Verkleben erfolgen.

In der Figur ist gezeigt, dass der Anschlag 20 an der Stirnseite 18 der Spindelmutter 14 als Vorsprung ausgeführt ist, der mit einem komplementären Anschlag 34 des Lager/Anschlagelements 24 zusammenwirken kann. Die Dimensionierung des Anschlags wird u.a. durch die Steigung des KGT Gewindes bestimmt, womit eine möglichst sichere Anschlagfläche gewährleistet werden kann.

Die zweite Verdrehsicherung 28 ist hier als viereckige Aussenkontur mit abgerundeten Ecken gezeigt, die in eine (nicht dargestellte) Aufnahme eines Gehäuses oder eines Lagers verbaut werden kann.

Figur 3a zeigt ein KGT 10 im montierten Zustand mit einem erfinderischen Lager-/ Anschlagelement 24 im Querschnitt, Abbildung 3b in einer Seitenansicht. Die Bedeutung des Bezugszeichens ist wie oben beschrieben. Die gezeigte Situation zeigt die Spindelmutter 14 im Endanschlag am Lager/Anschlagelements 24. Figur 3b zeigt, wie der Anschlag 20 mit seinem Gegenstück 34 zusammenwirkt. Im Querschnitt wird deutlich, dass es kein stirnseitiges Verklemmen von Lager/Anschlagelement 24 und Spindelmutter 14 gibt. Figur 3b macht deutlich, dass das Lager/Anschlagelements 24 mit seiner Aussenkontur frei liegt und so als Verdrehsicherung genutzt werden kann. Ebenso verdeutlicht die Zusammenstellung von Figur 3a und 3b, wie kompakt Lager, Verdrehsicherung und Anschlag zusammengefasst werden können.

## Patentansprüche

1. Kugelgewindetrieb (10), mit
• einer Gewindespindel (12) und
• einer Spindelmutter (14), die die Gewindespindel (12) koaxial zumindest teilweise umschliesst und einen Anschlag an einer axialen Stirnseite (18) aufweist,
• und einer Vielzahl von Kugeln, die im Zwischenraum (16) zwischen Gewindespindel (12) und Spindelmutter (14) umlaufen können;
• einem Radialanschlagselement (22) zur Wegbegrenzung des Gewindespindel-Spindelmutter-Systems mit einer am Umfang der Spindelmutter angeordneten Anschlagsfläche, wobei das Radialanschlagselement (22) kraftschlüssig mit der Gewindespindel (12) verbunden und darauf ausgelegt ist, mit einer entsprechenden Gegen-Anschlagsfläche an der komplementär ausgestalteten axialen Stirnseite (18) der Spindelmutter (14) zusammenzuwirken, und
• einem Lagerelement zur Aufnahme eines Längsendes der Gewindespindel (12)
**dadurch gekennzeichnet, dass**
• das Radialanschlagelement (22) und das Lagerelement kombiniert als einstückiges Lager/Anschlagelement (24) ausgeführt sind und zwei Verdrehsicherungen (26, 28) aufweist, wobei
• die erste Verdrehsicherung (26) so gestaltet ist, dass eine Winkelbeziehung zwischen der Gewindespindel (12) und dem Lager/Anschlagelement (24) einstellbar ist und anschliessend kraftschlüssig fixierbar ist, und
• die zweite Verdrehsicherung (28) so ausgelegt ist, dass das Lager/Anschlagelement (24) form- und/oder kraftschlüssig mit einer weiteren Aufnahme verbunden werden kann.

2. Kugelgewindetrieb (10) nach Anspruch 1, **dadurch gekennzeichnet, dass** die erste Verdrehsicherung (26) ein System ist aus einem an der Gewindespindel (12) angeformten Mehrkant (30) oder einem an ihr radial aussen angeordneten bzw. angeformten Zahnrad, das mit einer innenverzahnten Bohrung (32) des Lager/ Anschlagelementes (24) zusammenwirkt.

3. Kugelgewindetrieb (10) nach einem der Ansprüche 1-2, **dadurch gekennzeichnet, dass** der Anschlag (20) an der axialen Stirnseite (18) der Spindelmutter (14) als Vorsprung, als Auskragung oder als Freistellung ausgeführt ist.

4. Kugelgewindetrieb (10) nach einem der Ansprüche 1-3, **dadurch gekennzeichnet, dass** am Lager/Anschlagelement (24) mindestens ein radialer Anschlag (34) vorgesehen und als Vorsprung, Auskragung oder als Freistellung ausgeführt ist.

5. Kugelgewindetrieb (10) nach Anspruch 2, **dadurch gekennzeichnet, dass** die Teilung der innenverzahnten Bohrung ein ganzzahlig Vielfaches der Teilung des Mehrkants (30) bzw. des radial aussen angeordneten Zahnrads beträgt.

## Claims

1. Ball screw drive (10), having
• a threaded spindle (12) and
• a spindle nut (14) which at least partially surrounds the threaded spindle (12) coaxially and has a stop on an axial end face (18),
• and a plurality of balls which can rotate in the intermediate space (16) between the threaded spindle (12) and the spindle nut (14);
• a radial stop element (22) for limiting the travel of the threaded spindle-spindle nut system, having a stop surface arranged on the circumference of the spindle nut, wherein the radial stop element (22) is connected in a force-fitting manner to the threaded spindle (12) and is designed to interact with a corresponding mating stop surface on the complementarily configured axial end face (18) of the spindle nut (14), and
• a bearing element for accommodating a longitudinal end of the threaded spindle (12),
**characterized in that**
• the radial stop element (22) and the bearing element are designed combined as an integral bearing/stop element (24), and has two antirotation devices (26, 28), wherein
• the first anti-rotation device (26) is designed in such a way that an angular relationship between the threaded spindle (12) and the bearing/stop element (24) is adjustable and can subsequently be fixed in a force-fitting manner, and
• the second anti-rotation device (28) is designed in such a way that the bearing/stop element (24) can be connected in a form-fitting and/or force-fitting manner to a further receptacle.

2. Ball screw drive (10) according to claim 1, **characterized in that** the first anti-rotation device (26) is a system consisting of a polygon (30) formed on the threaded spindle (12) or of a gearwheel arranged or integrally formed radially on the outside thereof, which gearwheel cooperates with an internally toothed bore (32) of the bearing/stop element (24).

3. Ball screw drive (10) according to one of claims 1-2, **characterized in that** the stop (20) is designed on the axial end face (18) of the spindle nut (14) as a projection, as a protrusion or as a clearance.

4. Ball screw drive (10) according to one of the claims 1-3, **characterized in that** at least one radial stop (34) is provided on the bearing/stop element (24) and is designed as a projection, protrusion or as a clearance.

5. Ball screw drive (10) according to claim 2, **characterized in that** the pitch of the internally toothed bore is an integral multiple of the pitch of the polygon (30) or the radially externally arranged gearwheel.

## Revendications

1. Vis d'entraînement à billes (10), avec
• une broche filetée (12) et
• un écrou de broche (14) qui entoure au moins partiellement la broche filetée (12) de manière coaxiale et qui présente une butée sur une face frontale axiale (18),
• et une pluralité de billes qui peuvent circuler dans l'espace intermédiaire (16) entre la broche filetée (12) et l'écrou de broche (14) ;
• un élément de butée radiale (22), pour limiter la course du système broche filetée-écrou de broche avec une surface de butée disposée sur la périphérie de l'écrou de broche, l'élément de butée radiale (22) étant relié par adhérence à la broche filetée (12) et conçu pour coopérer avec une contre-surface de butée pertinente à la face frontale axiale (18) de configuration complémentaire de l'écrou de broche (14), et
• un élément de palier destiné à recevoir une extrémité longitudinale de la broche filetée (12)
**caractérisée en ce que**
• l'élément de butée radiale (22) et l'élément de palier sont réalisés en combinaison sous forme de palier/d'élément de butée (24) d'un seul tenant et présentent deux sécurités antirotation (26, 28),
• la première sécurité antirotation (26) étant conçue de telle sorte qu'une relation angulaire entre la broche filetée (12) et le palier/l'élément de butée (24) est réglable et est ensuite fixable par adhérence et
• la deuxième sécurité antirotation (28) étant conçue de telle sorte que le palier/l'élément de butée (24) peut être relié par complémentarité de forme et/ou de force à un autre logement.

2. Vis d'entraînement à billes (10) selon la revendication 1, **caractérisée en ce que** la première sécurité antirotation (26) est un système constitué d'un polygone (30) formé sur la broche filetée (12) ou d'une roue dentée disposée ou formée radialement à l'extérieur sur celle-ci, qui coopère avec un alésage à denture intérieure (32) du palier/de l'élément de butée (24).

3. Vis d'entraînement à billes (10) selon les revendications 1 à 2, **caractérisée en ce que** la butée (20) sur la face frontale axiale (18) de l'écrou de broche (14) est réalisée sous forme de saillie, de porte-à-faux ou de dégagement.

4. Vis d'entraînement à billes (10) selon les revendications 1 à 3, **caractérisée en ce qu'**au moins une butée radiale (34) est prévue sur le palier/l'élément de butée (24) et est réalisée sous forme de saillie, de porte-à-faux ou de dégagement.

5. Vis d'entraînement à billes (10) selon la revendication 2, **caractérisée en ce que** le pas de l'alésage à denture intérieure est un multiple entier du pas du polygone (30) ou de la roue dentée disposée radialement à l'extérieur.
